# EUROPÄISCHE PATENTSCHRIFT

(11) **EP 1 597 320 B1**
(45) Veröffentlichungstag und Bekanntmachung des Hinweises auf die Patenterteilung: **11.04.2007**
(21) Anmeldenummer: 04715274.9
(22) Anmeldetag: 27.02.2004
(51) Int. Cl.: C09B 5/62

(54) **WASSERLÖSLICHE, FLUORESZIERENDE PERYLENTETRACARBONSÄURE BISIMIDE**
WATER-SOLUBLE, FLUORESCENT PERYLENETETRACARBOXYLIC ACID BISIMIDES
BISIMIDES D'ACIDE PERYLENE TETRACARBOXYLIQUE FLUORESCENTS, SOLUBLES

(30) Priorität: 28.02.2003 DE 10308940
(43) Veröffentlichungstag der Anmeldung: 23.11.2005
(73) Patentinhaber: Max-Planck-Gesellschaft zur Förderung der Wissenschaften e.V., 80539 München (DE)
(72) Erfinder: KOHL, Christopher, 55127 Mainz (DE); QU, Jianqiang, 68169 Mannheim (DE); MÜLLEN, Klaus, 50939 Köln (DE)
(74) Vertreter: Weiss, Wolfgang
(86) Internationale Anmeldenummer: PCT/EP2004/001970
(87) Internationale Veröffentlichungsnummer: WO 2004/076562

(56) Entgegenhaltungen:
- EP-A- 0 227 980
- EP-A- 0 504 872
- WO-A-02/14414
- DE-A- 3 703 513
- QUANTE H ET AL: "NOVEL PERYLENE-CONTAINING POLYMERS" MACROMOLECULAR CHEMISTRY AND PHYSICS, WILEY VCH, WEINHEIM, DE, Bd. 197, November 1996 (1996-11), Seiten 4029-4044, XP008017838 ISSN: 1022-1352 in der Anmeldung erwähnt

## Beschreibung

Die Erfindung betrifft neue Perylentetracarbonsäurebisimid-Derivate mit verbesserten Anwendungseigenschaften.

Perylentetracarbonsäurebisimide sind für ihre außergewöhnliche thermische, chemische und fotophysikalische Stabilität bekannt (1). Sie werden als Farbstoffe und Pigmente, beispielsweise in reprografischen Prozessen (2), fluoreszierenden Solakollektoren (3), fotovoltaischen Zellen (4) und Farbstofflasern (5) eingesetzt. Funktionalisierte Perylentetracarbonsäurebisimide können außerdem als Initiator oder Reaktionspartner für Polymerisationsreaktionen eingesetzt werden und über kovalente Bindungen in die Polymere eingebunden werden (6). Ein weiteres mögliches Anwendungsgebiet ist der Einsatz als Markierungsgruppen in Nachweisverfahren, insbesondere in diagnostischen oder analytischen Verfahren an biologischen Proben, einschließlich lebender Zellen. Viele dieser Anwendungen basieren auf der hohen Fluoreszenzintensität der Perylen-Chromophor-Gruppe und darauf, dass die Fluoreszenzanregungs-Emissionswellenlängen von Perylentetracarbonsäurebisimiden bei Wellenlängen von oberhalb 500 nm liegen, bei denen Signalstörungen, verursacht durch Autofluoreszenz von Zellen, biologischen Geweben oder biologischen Flüssigkeiten, vernachlässigbar sind.

Ein Nachteil bekannter Perylentetracarbonsäurebisimide besteht jedoch darin, dass sie eine schlechte Wasserlöslichkeit und/oder eine schwache Fluoreszenzintensität in Wasser aufweisen (7). Diese Nachteile werden hauptsächlich durch die Aggregation von Farbstoffmolekülen in einer hydrophilen Umgebung bewirkt, wodurch die Anzahl biologischer Anwendungen begrenzt ist (8).

In DE-A-37 03 513 werden Perylentetracarbonsäurebisimide beschrieben, die einen oder mehrere Sulfonsäurereste in der Imidstruktur aufweisen.

Quante et al. (Macromol. Chem. Phys. 197 (1996), 4029-4044) offenbaren Perylentetracarbonsäurebisimide, die Sulfonsäuregruppen am Grundgerüst des Perylen-Chromophors enthalten. Weitere modifizierte Perylentetracarbonsäurebisimide werden in EP-A-0 648 817, EP-A-0 654 506, US-A-4,378,302, EP-A-O 869 959, WO 97/22607 sowie von Zhubanov et al. (Zh. Org. Khim. 28 (1992), 1486-1488) beschrieben.

WO 02/14414 offenbart funktionalisierte Perylentetracarbonsäurebisimide, die als Initiatoren oder/und als Reaktionspartner für Polymerisationsreaktionen bereitgestellt werden.

Diese Verbindungen zeigen eine erhöhte Fluoreszenz in wässrigen Lösungen. Doch die Nachteile des Standes der Technik, insbesondere die Neigung zur Aggregatbildung in wässrigen Lösungen, konnten nicht vollständig beseitigt werden.

Es besteht daher ein großes Bedürfnis, neue Perylentetracarbonsäurebisimide mit verbesserten Eigenschaften, insbesondere hinsichtlich der Wasserlöslichkeit oder/und der Fluoreszenzintensität in Wasser oder wässrigen Medien, bereitzustellen.

Diese Aufgabe wird erfindungsgemäß dadurch gelöst, dass Perylentetracarbonsäurebisimide mit mindestens zwei geladenen Gruppen am Grundgerüst des Perylen-Chromophors und raumerfüllenden Substituenten an den Imid-N-Atomen bereitgestellt werden. Die auf diese Weise hergestellten Verbindungen zeigen Fluoreszenzquantenausbeuten von bis zu 80 % in Wasser und können gegebenenfalls durch Einführung weiterer Funktionalitäten, beispielsweise hydrophiler Gruppen oder Kopplungsgruppen, in die Imidstruktur modifiziert werden.

Ein Gegenstand der Erfindung sind somit Perylentetracarbonsäurebisimide der Strukturformel (I) 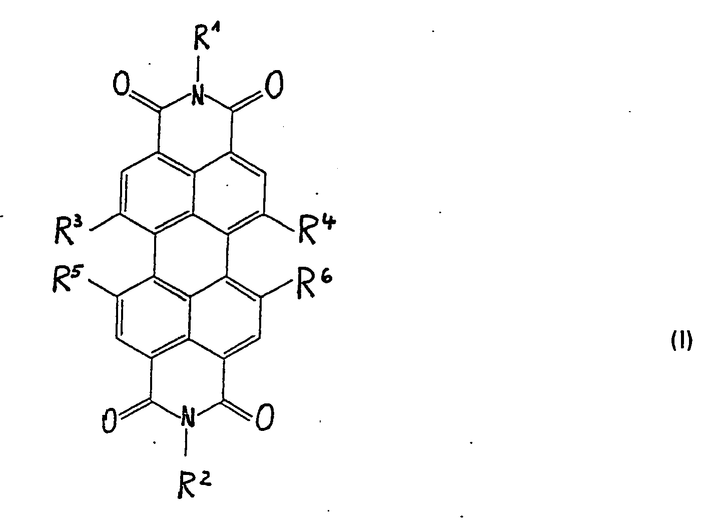 worin R¹ und R² jeweils unabhängig einen organischen Rest bedeuten, der über ein sekundäres oder tertiäres Kohlenstoffatom an das Imid-Stickstoffatom gebunden ist, und mindestens zwei von R³, R⁴, R⁵ und R⁶ jeweils unabhängig organische Reste bedeuten, die mindestens eine positiv oder/und negativ geladene Gruppe enthalten.

Die als Bestandteil der Imidstruktur vorliegenden Reste R¹ und R² sind sekundäre oder tertiäre aliphatische Reste oder cyclische Reste mit üblicherweise 3-30 Kohlenstoffatomen, insbesondere mono- oder bicyclische aromatische oder heteroaromatische Reste, wie etwa Phenyl, Pyridyl oder Naphthyl, die gegebenenfalls einen oder mehrere Substituenten tragen. Beispiele für geeignete Substituenten für aliphatische oder gesättigte cyclische Reste sind CN, NO₂, Halogen (z.B. F, Cl, Br oder 1), OH, OR⁷, OCOR⁷, SH, SR⁷, SCOR⁷, SO₂R⁷, CHO, COR⁷, COOH, COOM, COOR⁷, CONH₂, CONHR⁷, CON(R⁷)₂, SO₃H, SO₃M, SO₃R⁷, NH₂, NHR⁷ oder N(R⁷)₂, wobei M ein Kation, z.B. ein Alkalimetallion, wie Natrium, Kalium etc., ist und R⁷ einen gegebenenfalls Halogen-substituierten C₁-C₆-Alkylrest darstellt. Cyclische Reste, z.B. aromatische oder heteroaromatische Reste können zusätzlich durch einen oder mehrere Reste R⁷ substituiert sein. Weiterhin können in die Reste R¹ oder/und R² reaktive Funktionalitäten eingeführt werden, um eine Kopplung an biologische Substanzen zu ermöglichen. Beispiele solcher reaktiver Funktionalitäten sind Aktivester, Maleimide Isocyanate, Sulfonylhalogenide, Carbonsäurehalogenide, insbesondere Carbonsäurechloride, Jodacetamide, Aziridine, Epoxide, Acylazide und Acylnitrile.

Mindestens zwei der Reste R³, R⁴, R⁵ und R⁶ tragen mindestens eine geladene Gruppe. Vorzugsweise tragen alle vier Reste R³, R⁴, R⁵ und R⁶ mindestens eine geladene Gruppe. Bevorzugt ist die geladene Gruppe eine in neutralen Medien, z.B. bei pH 7, geladene Gruppe, beispielsweise eine positiv geladene Gruppe, wie etwa eine Aminogruppe oder eine Ammoniumgruppe, insbesondere eine quaternisierte Ammoniumgruppe, oder ein alkyliertes heteroaromatisches N-Atom, insbesondere eine N-Alkyl-Pyridinium-, N-Alkyl-Chinolinium- oder N-Alkyl-Isochinoliniumgruppe, wobei der Alkylrest vorzugsweise bis zu 6 Kohlenstoffatome aufweist und gegebenenfalls wie zuvor beschrieben substituiert sein kann. Beispiele für geeignete negativ geladene Gruppen sind Sulfonsäure- bzw. Carbonsäuregruppen, SO₃H und COOH sowie deren Salze SO₃M und COOM, wobei M ein Kation, z.B. ein Alkalimetallion, wie etwa Kalium oder Natrium, bedeutet. Darüber hinaus können R³, R⁴, R⁵ oder/und R⁶ auch mehrere gleich oder entgegengesetzt geladene Gruppen enthalten, wobei im letzteren Fall amphiphile Gruppen entstehen. Besonders bevorzugte amphiphile Gruppen sind heteroaromatische N-Atome, die mit einem Rest alkyliert sind, der eine -CO₂H, -SO₃H, -CO₂M oder -SO₃M-Gruppe trägt.

Weiterhin ist bevorzugt, dass zumindesst zwei der Reste R³, R⁴, R⁵ und R⁶ aromatische oder heteroaromatische Reste, insbesondere monocyclische oder bicyclische Reste, wie etwa Phenyl oder Pyridin, umfassen.

In einer besonders bevorzugten Ausführungsform werden mindestens zwei von R³, R⁴, R⁵ und R⁶ durch die allgemeine Strukturformel (II)

- O - Ar (II)

repräsentiert, worin Ar einen aromatischen oder heteroaromatischen Rest bedeutet, der mindestens eine geladene Gruppe, wie zuvor angegeben, enthält. Im Falle, dass Perylentetracarbonsäurebisimide mit negativen Ladungsträgern verwendet werden, kann mindestens einer von R³, R⁴, R⁵ und R⁶ die allgemeine Strukturformel (III) aufweisen: 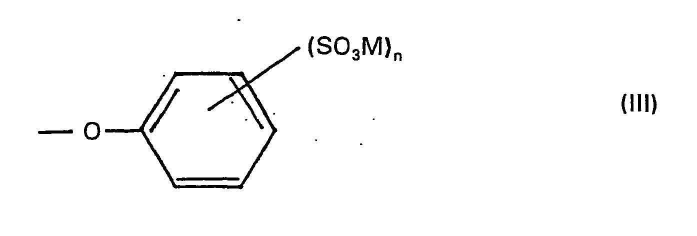 worin M ein Kation ist und n 1, 2 oder 3 ist.

Im Falle der Verwendung von Perylentetracarbonsäurebisimiden mit positiven Ladungsträgern kann mindestens einer von R³, R⁴, R⁵ und R⁶ die allgemeine Strukturformel (IV) aufweisen: 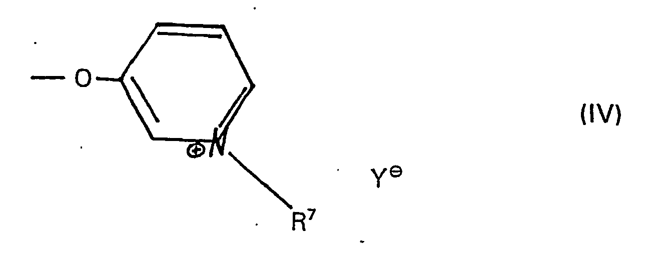 worin R⁷ einen gegebenenfalls substituierten C₁-C₆-, vorzugsweise C₁-C₄-Alkylrest darstellt und Y ein Anion, z.B. ein Halogenidion, ist. Wenn der Rest R⁷ als Substituent eine negativ geladene Gruppe trägt, erhält man einen amphiphilen Rest.

Die erfindungsgemäßen. Perylentetracarbonsäurebisimide werden üblicherweise aus einem technisch gut zugänglichen Di- oder Tetrahalogensubstituierten Perylentetracarbonsäurebisanhydrid durch Kondensation mit einem primären Amin, z.B. H₂NR¹ oder H₂NR² hergestellt. Die resultierenden Halogen-substituierten Perylendi- oder -tetracarbonsäurebisimide der allgemeinen Strukturformel (V) 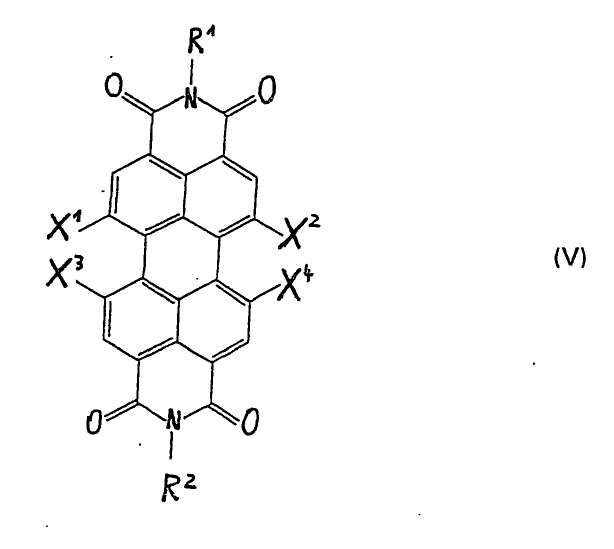 worin R¹ und R² wie zuvor definiert sind und mindestens zwei von X¹, X², X³ und X⁴ Halogen, insbesondere Cl oder Br bedeuten, werden anschließend mit einer Verbindung der allgemeinen Strukturformel (VI)

HO - Ar' (VI)

umgesetzt, worin Ar' einen aromatischen oder heteroaromatischen Rest bedeutet. Bei dieser Reaktion entstehen tetra-substituierte Perylentetracarbonsäurebisimide der allgemeinen Strukturformel (Vlla) oder disubstituierte Perylentetracarbonsäurebisimide der allgemeinen Strukturformel (VIIb): 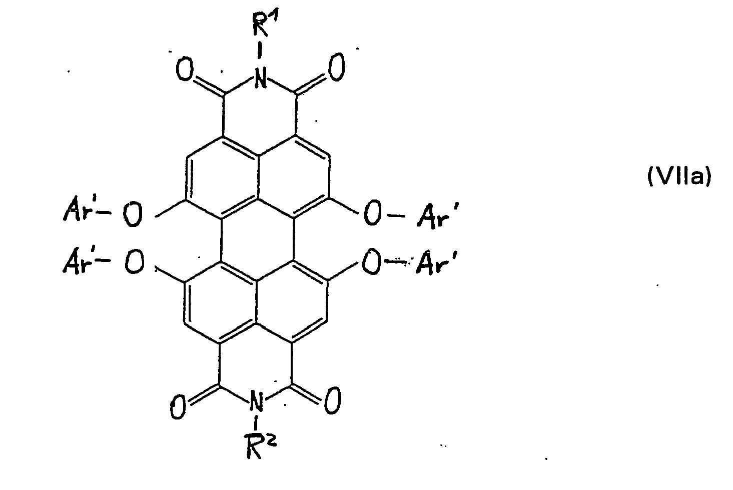 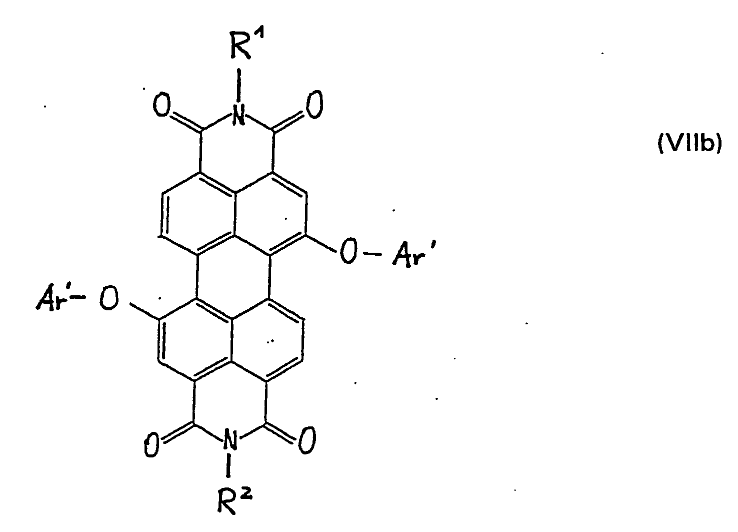 Anschließend können hydrophile Gruppen, wie zuvor angegeben, in die aromatischen oder heteroaromatischen Reste Ar' eingeführt werden. Beispielsweise kann die Einführung von mindestens einer Gruppe SO₃H oder SO₃M in Ar' durch Umsetzung mit H₂SO₄ unter geeigneten Bedingungen erfolgen. Andererseits kann eine Alkylierung von heteroaromatischen N-Atomen in Ar' erfolgen, z.B. durch Umsetzung mit einem Alkylhalogenid, z.B. CH₃l, unter geeigneten Bedingungen.

Die erfindungsgemäßen Verbindungen können in allen für den Einsatz von Perylentetracarbonsäurebisimiden geeigneten technischen Gebieten angewendet werden, beispielsweise in Farbstofflasern, als Markierungsgruppen in analytischen Verfahren, als Tracer, in Szintillationszählern, in Fluoreszenz-Solarkollektoren, in Flüssigkristallen, in Kaltlichtquellen, bei der Materialprüfung, als Fotoleiter, in fotografischen Verfahren, in Beleuchtungs- und Anzeigelementen, als Halbleiter etc.

Die Farbstoffe werden vorzugsweise in Verbindung mit einem geeigneten Träger, beispielsweise in einer Konzentration von 0,0005 bis 0,5 % bezogen auf das Gewicht des Trägers, eingesetzt. Die Farbstoffe oder Konjugate der Farbstoffe, z.B. kovalente Konjugate mit Biomolekülen, wie Nukleinsäuren, Proteinen, Peptiden, Sacchariden etc., können in Flüssigkeiten, z.B. organischen oder/und wässrigen Lösungsmitteln, oder in Festkörpern, z.B. Kunststoffen, gelöst werden.

Weiterhin soll die vorliegende Erfindung durch Abbildungen und Beispiele näher erläutert werden.

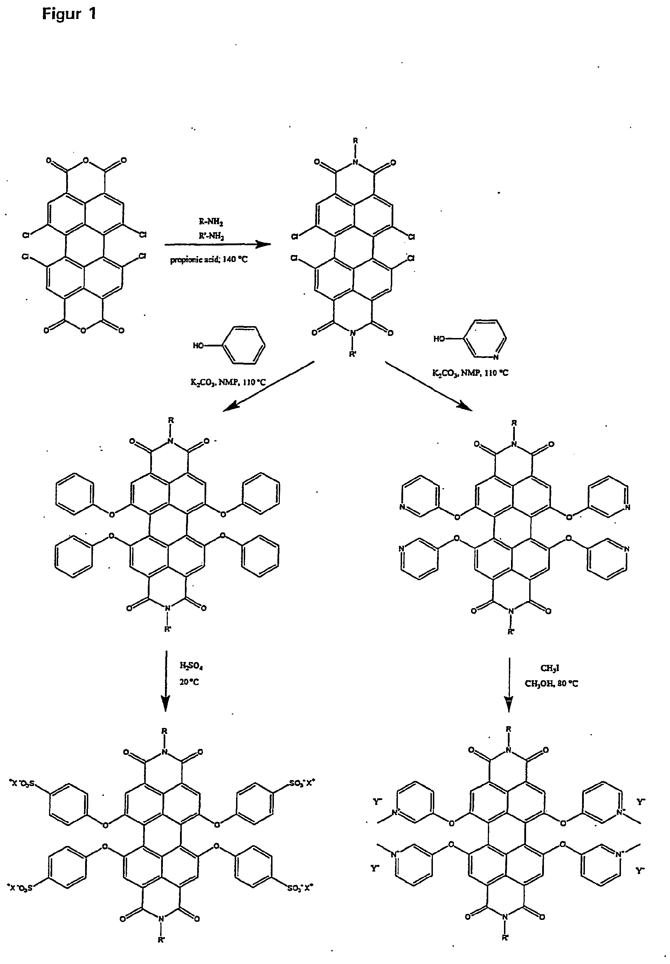

**Figur 1** zeigt ein Reaktionsschema zur Herstellung der in den Beispielen 1-4 genannten tetra-substituierten Verbindungen.

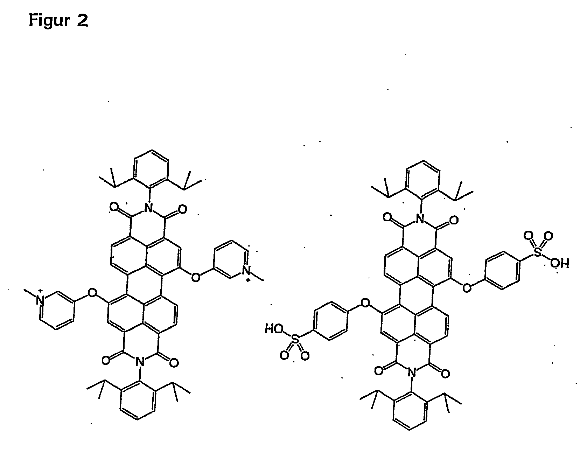

**Figur 2** zeigt die in Beispiel 5 genannten di-substituierten Verbindungen.

### Beispiele

### Beispiel 1: Herstellung von N,N'-Bis(2,6-diisopropylphenyl)-1,6,7,12-tetra(phenoxy)perylen-3,4:9,10-tetracarbonsäurebisimid

5 g (5,9 mmol) N,N'-Bis(2,6-diisopropylphenyl)-1,6,7,12-tetrachlorperylen-3,4:9,10-tetracarbonsäurediimid, 2,7 g (29 mmol) Phenol und 4 g (29 mmol) K₂CO₃ wurden unter einer Inertgasatmosphäre in 200 ml N-Methylpyrrolidon (NMP) suspendiert. Das Reaktionsgemisch wurde auf 110 °C erhitzt und für 6 h gerührt. Nach Abkühlen auf Raumtemperatur wurde das Gemisch in 500 ml einer wässrigen 2 M Salzsäurelösung gegossen. Das resultierende Präzipitat wurde filtriert, mit Wasser bis zur Neutralität des Filtrats gewaschen und in Vakuum bei 75 °C getrocknet. Das Produkt wurde weiter durch Säulenchromatografie (SiO₂/CH₂Cl₂) aufgereinigt.
Ausbeute 4,9 g (77 %) roter Feststoff
M.P.>300 °C;¹H-NMR (300 MHz, C₂D₂Cl₄, 300 K): *δ* = 8,13 (s, 4 H), 7,33 (t, ³J = 7,5 Hz, 2 H), 7,24-7,08 (m, 12 H), 7,02 (t, ³J = 7,5 Hz, 4 H), 6,93 (d, ³J = 7,5 Hz, 8 H), 2,60 (sept. ³J = 6,9 Hz, 4 H), 1,03 (d, ³J = 6,9 Hz, 24 H); ¹³C-NMR (75 MHz, C₂D₂Cl₄, 300 K): *δ* = 163,50, 156,17, 155,39, 145,68, 133,41, 130,70, 130,31, 129,63, 125,07, 124,22, 122,90, 121,02, 120,48, 120,20, 29,30, 24,42; IR (KBr): u = 3066, 2962, 2868, 2362, 1707, 1675, 1586, 1508, 1487, 1408, 1342, 1311, 1285, 1199, 1074, 1021, 959, 904, 875, 811, 749, 689, 578, 522 cm⁻¹; UV-Vis (CHCl₃): λₘₐₓ (∈) = 542 (31000), 578 nm (48500 M⁻¹ cm⁻¹); Fluoreszenz (CHCl₃, Anregung = 542 nm) : λₘₐₓ = 613 nm, MS (FD, 8 kV): m/z = 1080,2 (100 %) [M⁺]

### Beispiel 2: Herstellung von N,N'-Bis(2,6-diisopropylphenyl)-1,6,7,12-tetra(4-sulfonylphenoxy)perylen-3,4:9,10-tetracarbonsäurebisimid

2 g (1,9 mmol) der in Beispiel 1 hergestellten Verbindung wurden in 4 ml konzentrierter Schwefelsäure gelöst und für 12 h bei Raumtemperatur (20 °C) gerührt. Das Produkt wurde durch Zugabe von Wasser präzipitiert, filtriert und in Vakuum bei 75 °C getrocknet.

M.P.: > 300 °C; ¹H-NMR (300 MHz, CH₃OH-D₄, 300 K): *δ* = 7,91 (s, 4 H), 7,59 (d, ³J = 8,8 Hz, 8 H), 7,17 (t, ³J = 7,6 Hz, 2 H), 6,88 (d, ³J = 8,8 Hz, 8 H), 2,45 (sept. ³J = Hz, 4 H), 0,85 (d, ³J = Hz, 24 H); ¹³C-NMR (75 MHz, CH₃OH-D₄, 300 K): *δ* = 164,61, 158,49, 156,94, 147,21, 142,46, 131,83, 129,49, 125,01, 124,43, 122,35, 121,86, 120,75, 30,29, 24,25, 13,40; IR (KBr): u = 2970, 2361, 1701, 1655, 1588, 1491, 1410, 1340, 1287, 1208, 1180, 1125, 1066, 1032, 1007, 882, 846, 699, 580 cm⁻¹ ; UV-Vis (H₂O): λₘₐₓ (∈) = 536 (20100), 571 nm (27800 M⁻¹ cm⁻¹); MS (LD-TOF): m/z = 1401,1 [M⁺]

### Beispiel 3: Herstellung von N,N'-Bis(2,6-diisopropylphenyl)-1,6,7,12-tetra(3-pyridoxy)perylen-3,4:9, 1 0-tetracarbonsäurebisimid

5 g (5,9 mmol) N,N'-Bis(2,6-diisopropylphenyl)-1,6,7,12-tetrachlorperylen-3,4:9,10-tetracarbonsäurebisimid, 2,85 g (30 mmol) Hydroxypyridin und 4 g (30 mmol) K₂CO₃ wurden in 250 ml NMP gelöst. Das Reaktionsgemisch wurde bei 110 °C unter einer Inertgasatmosphäre gerührt. Nach 4 h wurde auf Raumtemperatur abgekühlt und mit verdünnter Salzsäure neutralisiert. Das Rohprodukt wurde filtriert, mit Wasser gewaschen und bei 75 °C in Vakuum getrocknet. Der erhaltene Feststoff wurde durch Säulenchromatografie mit Ethylacetat weiter aufgereinigt.

M.P.:>300 °C; ¹H-NMR (250 MHz, C₂D₂Cl₄, 300 K): *δ* = 8,29 (d, ³J = 6,3 Hz, 4 H), 8,28 (s, 4 H), 8,14 (s, 4 H), 7,35 (t, ³J = 7,9 Hz, 2 H), 7,30-7,27 (m, 4 H), 7,19 (d, ³J = 7,9 Hz, 4 H), 7,17 (d, ³J = 8,2 Hz, 4 H), 2,58 (sept, ³J = 6,6 Hz, 4 H), 1,03 (d, ³J = 6,6 Hz, 24 H); ¹³C-NMR (75 MHz, C₂D₂Cl₄, 300 K): *δ* = 162,99, 155,52, 152,09, 146,32, 145,65, 141,97, 133,50, 130,29, 129,84, 127,30, 124,93, 124,33, 123,68, 121,38, 121,15, 120,49, 94,29, 29,35, 24,45, 16,32, 14,85; IR (KBr): u = 3061, 2963, 2868, 2361, 1707, 1671, 1593, 1508, 1474, 1423, 1407, 1339, 1309, 1279, 1209, 1102, 1019, 958, 875, 808, 738, 705, 581 cm⁻¹; UV-Vis (CH₃OH): λₘₐₓ (∈) = 526 (30500), 560 nm (48800 M⁻¹ cm⁻¹); Fluoreszenz (CH₃OH, Anregung: 526 nm): λₘₐₓ = 610 nm; MS (FD, 8 kV): m/z (rel. Int.) = 1083,2 (100 %) [M⁺]

### Beispiel 4: Herstellung von N,N'-Bis(2,6-diisopropylphenyl)-1,6,7,12-tetra[3-(N-methylpyridinium)oxy]perylen-3,4:9,10-tetracarbonsäurebisimid

1 g (0,92 mmol) der in Beispiel 3 hergestellten Verbindung wurde bei 80 °C in 100 ml Methanol gelöst. Zu der gerührten Lösung wurden 655 mg (4,6 mmol)Methyljodid gegeben und das Gemisch für 12 h unter Rückfluss gehalten. Das resultierende Produkt fiel in hoher Reinheit ein.

M.P.:>300 °C; ¹H-NMR (250 MHz, CH₃OH-D_{4,}300 K): *δ* = 9,22-9,01 (m, 2 H), 8,78-8,42 (m, 12 H), 8,12-7,97 (m, 2 H), 7,88-7,68 (m, 2H), 7,57-7,33 (m, 8 H), 4,47-4,40 (s, 12 H), 2,91-2,69 (m, 4 H), 1,15-1,11 (m, 24 H); ¹³C-NMR (75 MHz, CH₂OH-D₄, 300 K): *δ* = 164,40, 164,26, 157,23, 157,05, 154,26, 153,88, 147,18, 146,61, 142,63, 138,61, 135,80, 131,58, 130,79, 130,06, 129,30, 126,65, 126,44, 125,13, 124,56, 121,62, 67,38, 30,30, 24,36, 13,42; IR (KBr): u = 2963, 2361, 2336, 1704, 1665, 1594, 1503, 1473, 1408, 1337, 1309, 1275, 1212, 812, 672 cm⁻¹; UV-Vis (H₂O): λₘₐₓ (∈) = 520 (19300), 555 nm (25700 M⁻¹ cm⁻¹); Fluoreszenz (H₂O, Anregung : 520 nm): λₘₐₓ = 601 nm

### Beispiel 5: Herstellung von disubstituierten Perylentetracarbonsäurebisimiden

Ausgehend von N,N'-Bis(2,6-diisopropylphenyl)-1,7-dibromperylen-3,4:9,10-tetracarbonsäurebisimid wurden, entsprechend der in den Beispielen 1 und 2 beschriebenen Reaktionsführung, N,N'-Bis(2,6-diisopropylphenyl)-1,7-di(4-sulfonylphenoxy)perylen-3,4:9,10-tetracarbonsäurebisimid und, entsprechend der in den Beispielen 3 und 4 beschriebenen Reaktionsführung, N,N'-Bis(2,6-diisopropylphenyl)-1,7-di[3-(N-methylpyridinium)oxy]perylen-3,4:9,10-tetracarbonsäurebisimid hergestellt.

### Referenzen:

(1) Y. Nagao und T. Misono, Dyes Pigm., 1984, 5, 171 A. Rademacher, S. Merkle und H. Lanhals, Chem. Ber. 1982, 115, 2927
(2) H.O. Loutfy, A.M. Hor, P. Kazmaier and M. Tam, J. Imaging Sci., 1989, 33, 151
(3) G. Seybold und G. Wagenblast, Dyes Pigm. 1989, 11, 303
(4) L. Schmidt-Mende, A. Fechtenkötter, K. Müllen, E. Moons, R.H. Friend, J.D. MacKenzie, Science, 2001, 293, 1119
(5) R. Gvishi, R. Reisfeld und Z. Bursheim, Cehm. Phys. Lett., 1993, 213,338
(6) WO 02/14414 A2
(7) H. lcil, D. Uzun und N. Pasaogullari, Spectrosc. Lett., 1998, 31, 667 S. Icil, S. Demic, B. Dindar, A.O. Doroshenko und C. Timur, J. Photochem. Photobiol., 2000, 136, 15
   H. Quante, P. Schlichting, U. Rohr, Y. Geerts und K. Müllen, Macromol. Chem. Phys., 1996, 197, 4029
   W. Bauer, D. Baumgart, D. Schnaltmann, K.-P. Kreutzer und W. Zöller, EP 0 832 937 B1
   H.-A. Klok, J. Rodriguez Hernandez, S. Becker und K. Müllen, J. Polym. Sci., 2001, 39, 1572
(8) H. Han, R.J. Bennett und L.H. Hurley, Biochem. 2000, 39, 9311 N.V. Khromov-Borisov, M.L. Indenbom und A.F. Danilov, Pharm. Chem. J. 1980, 14, 90

## Patentansprüche

1. Perylentetracarbonsäurebisimide der Strukturformel (I) 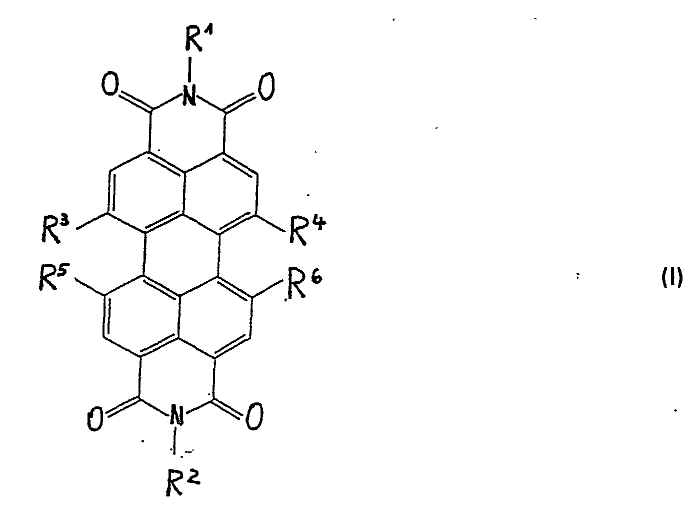 worin R¹ und R² jeweils unabhängig einen organischen Rest bedeuten, der über ein sekundäres oder tertiäres Kohlenstoffatom an das Imid-Stickstoffatom gebunden ist, und
mindestens zwei von R³, R⁴, R⁵ und R⁶ jeweils unabhängig organische Reste bedeuten, die mindestens eine positiv oder/und negativ geladene Gruppe enthalten.

2. Verbindungen nach Anspruch 1,
**dadurch gekennzeichnet,**
**dass** R¹ oder/und R² sekundäre oder tertiäre aliphatische Reste oder cyclische Reste darstellen.

3. Verbindungen nach Anspruch 1 oder 2,
**dadurch gekennzeichnet,**
**dass** R¹ oder/und R² aromatische oder heteroaromatische Reste, insbesondere Phenyl-, Pyridyl- oder Naphthylreste darstellen, die gegebenenfalls einen oder mehrere Substituenten enthalten.

4. Verbindungen nach einem der Ansprüche 1 bis 3,
**dadurch gekennzeichnet,**
**dass** mindestens zwei von R³, R⁴, R⁵ und R⁶ jeweils unabhängig einen organischen Rest bedeuten, der eine (in neutralen Medien) positiv geladene Gruppe trägt.

5. Verbindungen nach einem der Ansprüche 1 bis 4,
**dadurch gekennzeichnet,**
**dass** mindestens zwei von R³, R⁴, R⁵ und R⁶ jeweils unabhängig einen organischen Rest bedeuten, der eine Gruppe ausgewählt aus quarternären Ammonium- und N-alkylierten heteroaromatischen N-Gruppen, wie N-Alkyl-Pyridinium-, N-Alkyl-Chinolinium-oder N-Alkyllsochinolinium-Gruppen, trägt.

6. Verbindungen nach einem der Ansprüche 1 bis 3,
**dadurch gekennzeichnet,**
**dass** R³, R⁴, R⁵ und R⁶ jeweils unabhängig einen organischen Rest bedeuten, der eine (in neutralen Medien) negativ geladene Gruppe trägt.

7. Verbindungen nach einem der Ansprüche 1 bis 6,
**dadurch gekennzeichnet,**
**dass** mindestens zwei von R³, R⁴, R⁵ und R⁶ jeweils unabhängig einen organischen Rest bedeuten, der eine Gruppe ausgewählt aus SO₃H, COOH, SO₃M und COOM trägt, wobei M ein Kation bedeutet.

8. Verbindungen nach einem der Ansprüche 1 oder 7,
**dadurch gekennzeichnet,**
**dass** R³, R⁴, R⁵ oder/und R⁶ aromatische oder heteroaromatische Reste, insbesondere Phenyl- oder Pyridinreste umfassen.

9. Verbindungen nach einem der Ansprüche 1 bis 8,
**dadurch gekennzeichnet,**
**dass** mindestens einer von R³, R⁴, R⁵ und R⁶ die allgemeine Strukturformel (II) aufweist:
-O- Ar (II)
worin Ar einen aromatischen oder heteroaromatischen Rest bedeutet, der mindestens eine geladene Gruppe enthält.

10. Verbindungen nach Anspruch 9,
**dadurch gekennzeichnet,**
**dass** mindestens einer von R³, R⁴, R⁵ und R⁶ die allgemeine Strukturformel (III) aufweist: 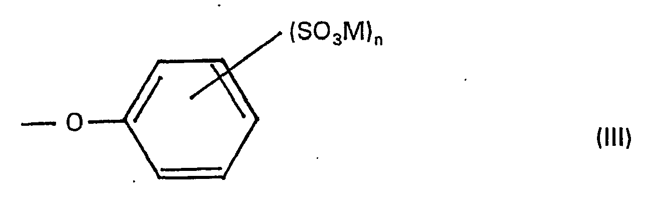 worin M ein Kation ist und n eine ganze Zahl von 1-3 ist.

11. Verbindungen nach Anspruch 9,
**dadurch gekennzeichnet,**
**dass** mindestens einer von R³, R⁴, R⁵ und R⁶ die allgemeine Strukturformel (IV) aufweist: 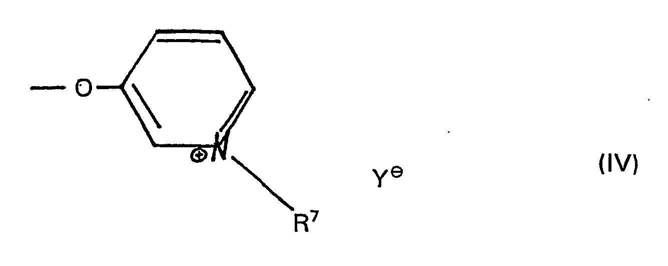 worin R⁷ einen gegebenenfalls substituierten C₁-C₆-Alkylrest darstellt und Y ein Anion ist.

12. Verfahren zur Herstellung von Perylentetracarbonsäurebisimiden der allgemeinen Strukturformel (I), umfassend die Schritte:
(a) Umsetzen von Halogen-substituierten Perylendi- oder -tetracarbonsäurebisimiden der allgemeinen Strukturformel (V): 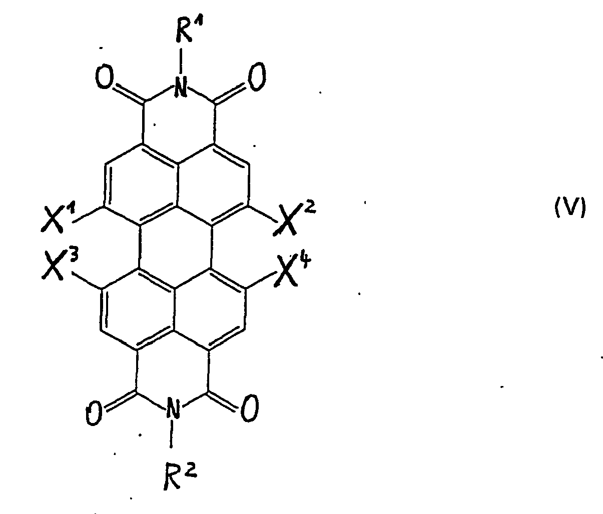 worin R¹ und R² wie in Anspruch 1 definiert sind und mindestens zwei von X¹, X², X³ und X⁴ Halogen, insbesondere Cl oder Br bedeuten, mit einer Verbindung der allgemeinen Strukturformel (VI):
HO - Ar' (VI)
worin Ar' einen aromatischen oder heteroaromatischen Rest bedeutet,
zu tetra-substituierten Perylentetracarbonsäurebisimiden der allgemeinen Strukturformel (Vlla) oder zu disubstituierten Perylentetracarbonsäurebisimiden der allgemeinen Strukturformel (VIIb): 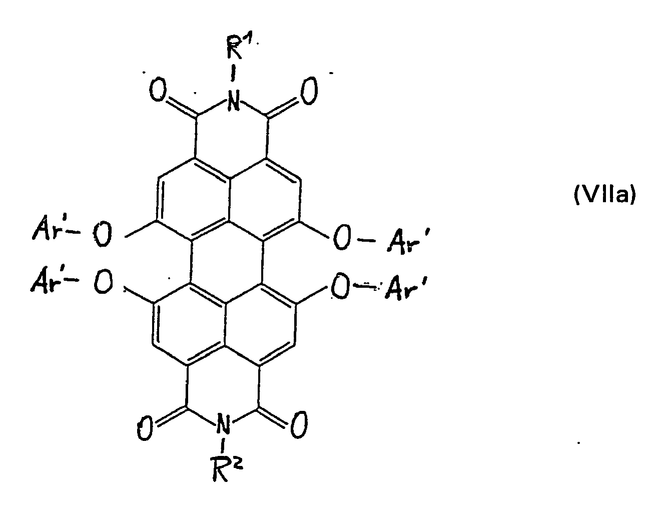 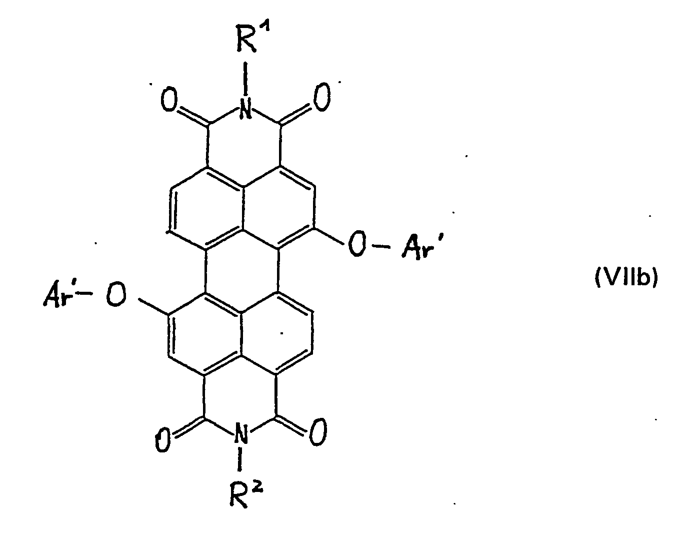 und
(b) Einführen von hydrophilen Gruppen in die aromatischen oder heteroaromatischen Reste Ar'.

13. Verfahren nach Anspruch 12,
**dadurch gekennzeichnet,**
**dass** Schritt (b) die Einführung von mindestens einer Gruppe SO₃H oder SO₃M in Ar' umfasst, wobei M ein Kation ist.

14. Verfahren nach Anspruch 12,
**dadurch gekennzeichnet,**
**dass** Schritt (b) die Alkylierung mindestens eines heteroaromatischen N-Atoms in Ar' umfasst.

## Claims

1. A perylenetetracarboxdiimide of the structural formula (I) 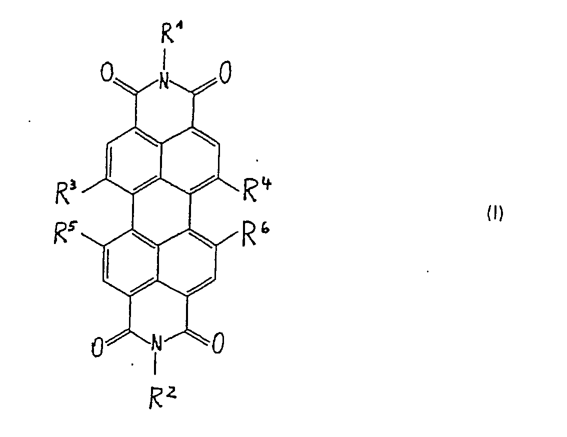 in which R¹ and R² are each independently an organic moiety which is bonded via a secondary or tertiary carbon atom to the imide nitrogen atom, and
at least two of R³, R⁴, R⁵ and R⁶ are each independently organic moieties which contain at least one positively or/and negatively charged group.

2. A compound as claimed in claim 1,
**characterized in that**
R¹ or/and R² are secondary or tertiary aliphatic moieties or cyclic moieties.

3. A compound as claimed in claim 1 or 2,
**characterized in that**
R¹ or/and R² are aromatic or heteroaromatic moieties, in particular phenyl, pyridyl or naphthyl moieties, which optionally contain one or more substituents.

4. A compound as claimed in one of claims 1 to 3,
**characterized in that**
at least two of R³, R⁴, R⁵ and R⁶ are each independently an organic moiety which bears a positively charged (in neutral media) group.

5. A compound as claimed in one of claims 1 to 4,
**characterized in that**
at least two of R³, R⁴, R⁵ and R⁶ are each independently an organic moiety which bears a group selected from quaternary ammonium and N-alkylated heteroaromatic N-groups such as N-alkylpyridinium, N-alkylquinolinium or N-alkylisoquinolinium groups.

6. A compound as claimed in one of claims 1 to 3,
**characterized in that**
R³, R⁴, R⁵ and R⁶ are each independently an organic moiety which bears a negatively charged (in neutral media)group.

7. A compound as claimed in one of claims 1 to 6,
**characterized in that**
at least two of R³, R⁴, R⁵ and R⁶ are each independently an organic moiety which bears a group selected from SO₃H, COOH, SO₃M and COOM, wherein M is a cation.

8. A compound as claimed in one of claims 1 to 7,
**characterized in that**
R³, R⁴, R⁵ or/and R⁶ comprise aromatic or heteroaromatic moieties, in particular phenyl or pyridine moieties.

9. A compound as claimed in one of claims 1 to 8,
**characterized in that**
at least one of R³, R⁴, R⁵ and R⁶ has the general structural formula (II):
- O - Ar (II)
in which Ar is an aromatic or heteroaromatic moiety which contains at least one charged group.

10. A compound as claimed in claim 9,
**characterized in that**
at least one of R³, R⁴, R⁵ and R⁶ has the general structural formula (III): 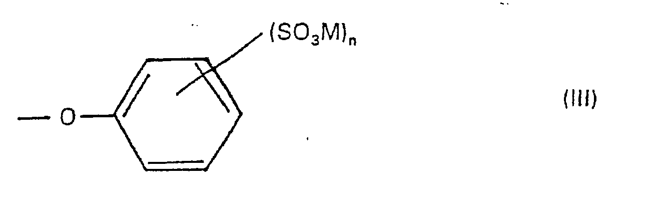 in which M is a cation and n is an integer of 1-3.

11. A compound as claimed in claim 9,
**characterized in that**
at least one of R³, R⁴, R⁵ and R⁶ has the general structural formula (IV): 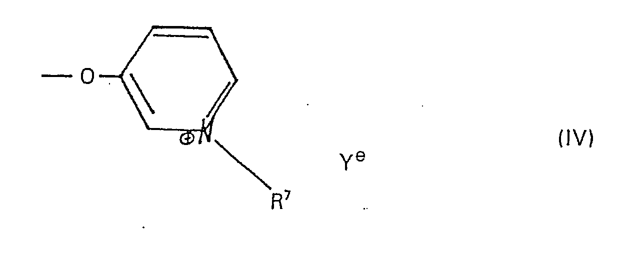 in which R⁷ is an optionally substituted C₁-C₆-alkyl moiety and Y is an anion.

12. A process for preparing perylenetetracarboxdiimides of the general structural formula (I), comprising the steps:
(a) reacting halogen-substituted perylenedi- or perylenetetracarboxdiimides of the general structural formula (V): 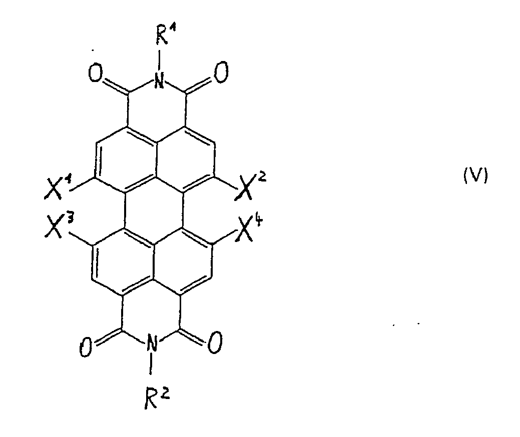 in which R¹ and R² are each as defined in claim 1 and at least two of X¹, X², X³ and X⁴ are each halogen, in particular Cl or Br, with a compound of the general structural formula (VI):
HO - Ar' (VI)
in which Ar' is an aromatic or heteroaromatic moiety
to give tetrasubstituted perylenetetracarboxdiimides of the general structural formula (VIIa) or to give disubstituted perylenetetracarboxdiimides of the general structural formula (VIIb): 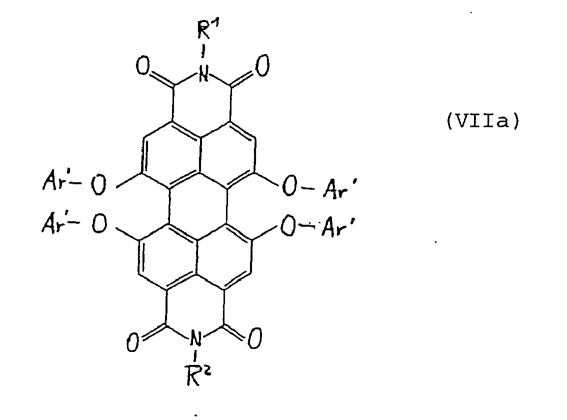 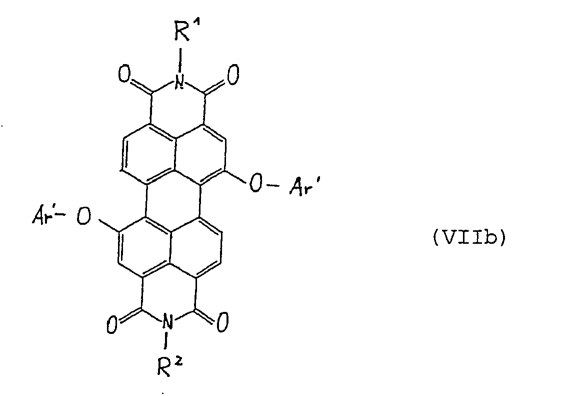 and
(b) introducing hydrophilic groups into the aromatic or heteroaromatic Ar' moieties.

13. The process as claimed in claim 12,
**characterized in that**
step (b) comprises the introduction of at least one SO₃H or SO₃M group into Ar', wherein M is a cation.

14. The process as claimed in claim 12,
**characterized in that**
step (b) comprises the alkylation of at least one heteroaromatic nitrogen atom in Ar'.

## Revendications

1. Bisimides de l'acide pérylène tétracarboxylique de formule structurale (I) 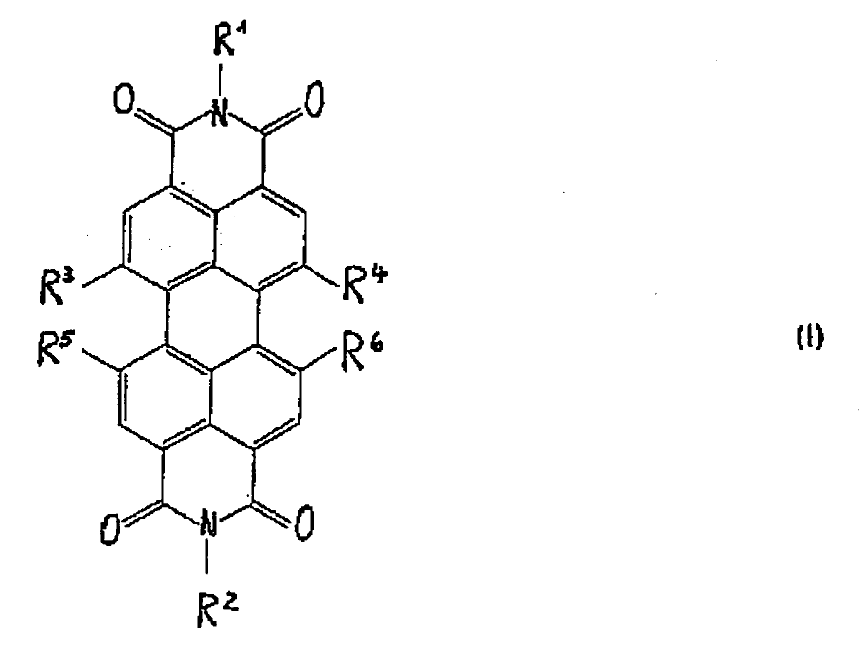 dans laquelle R¹ et R², chacun indépendamment, représentent un reste organique, qui est lié par un atome de carbone secondaire ou tertiaire à un atome d'azote de l'imide, et
au moins deux groupes parmi R³, R⁴, R⁵ et R ⁶ chacun indépendamment, représentent des restes organiques qui contiennent au moins un groupe chargé positivement et/ou négativement.

2. Composés selon la revendication 1, **caractérisés en ce que** R¹ et/ou R² représentent des restes aliphatiques secondaires ou tertiaires ou des restes cycliques.

3. Composés selon la revendication 1 ou la revendication 2, **caractérisés en ce que** R¹ et/ou R² représentent des restes aromatiques ou hétéroaromatiques, en particulier les restes phényle, pyridyle ou naphtyle qui, le cas échéant, contiennent un ou plusieurs substituants.

4. Composés selon l'une quelconque des revendications 1 à 3, **caractérisés en ce qu'**au moins deux groupes parmi R³, R⁴, R⁵ et R⁶, chacun indépendamment, représentent un reste organique portant un groupe chargé positivement (dans un milieu neutre).

5. Composés selon l'une quelconque des revendications 1 à 4, **caractérisés en ce qu'**au moins deux groupes parmi R³, R⁴, R⁵ et R⁶, chacun indépendamment, représentent un reste organique qui porte un groupe choisi parmi les groupes ammonium quaternaires et les groupes N- hétéroaromatiques N-alkylés, comme les groupes N-alkyl-pyridinium, N-alkyl-chinolinium ou N-alkyl-isochinolinium.

6. Composés selon l'une quelconque des revendications 1 à 3, **caractérisés en ce qu'**au moins deux groupes parmi R³, R⁴, R⁵ et R⁶, chacun indépendamment, représentent un reste organique portant un groupe chargé négativement (dans un milieu neutre).

7. Composés selon l'une quelconque des revendications 1 à 6, **caractérisés en ce qu'**au moins deux groupes parmi R³, R⁴, R⁵ et R⁶, chacun indépendamment, représentent un reste organique qui porte un groupe choisi parmi SO₃H, COOH, SO₃M et COOM, sachant que M représente un cation.

8. Composés selon l'une quelconque des revendications 1 ou 7, **caractérisés en ce que** R³, R⁴, R⁵ et/ou R⁶ comprennent des restes aromatiques ou hétéroaromatiques, en particulier les restes phényle ou pyridine.

9. Composés selon l'une quelconque des revendications 1 à 8, **caractérisés en ce qu'**au moins un groupe parmi R³, R⁴, R⁵ et R⁶ présente la formule structurale générale (II) :
- O - Ar (II)
dans laquelle Ar représente un reste aromatique ou hétéroaromatique qui contient au moins un groupe chargé.

10. Composés selon la revendication 9, **caractérisés en ce qu'**au moins un groupe parmi R³, R⁴, R⁵ et R⁶ présente la formule structurale générale (III) : 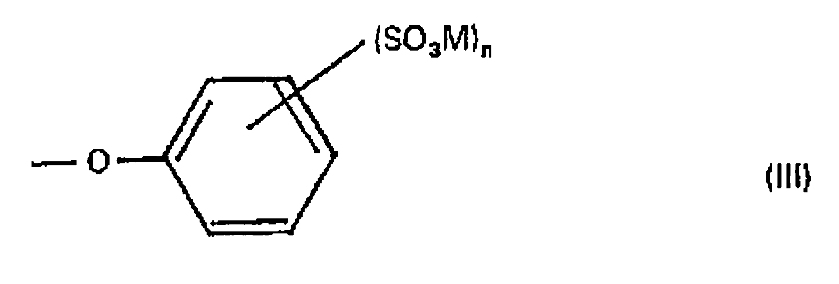 dans laquelle M est un cation et n est un nombre entier de 1 à 3.

11. Composés selon la revendication 9, **caractérisés en ce qu'**au moins un groupe parmi R³, R⁴, R⁵ et R⁶ présente la formule structurale générale (IV) : 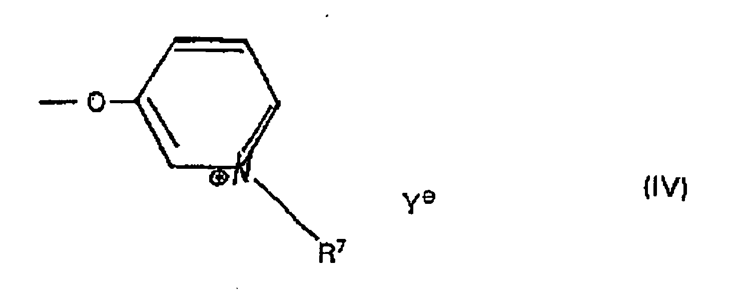 dans laquelle R⁷ représente un reste alkyle en C₁ à C₆ substitué le cas échéant et Y est un anion.

12. Procédé de préparation de bisimides de l'acide pérylène tétracarboxylique de formule structurale générale (I), comprenant les étapes consistant à :
(a) faire réagir des bisimides de l'acide pérylène di- ou tétracarboxylique substitués par des halogènes de formule structurale générale (V) : 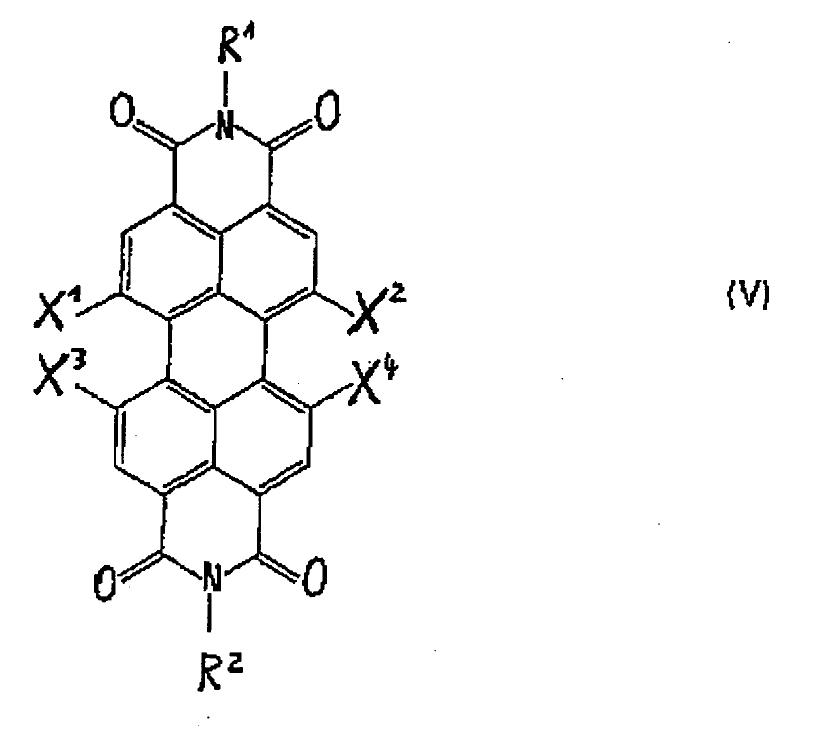 dans laquelle R¹ et R² sont définis comme dans la revendication 1 et au moins deux groupes parmi X¹, X², X³ et X⁴ représentent
un halogène, en particulier Cl ou Br, avec un composé de formule structurale générale (VI) :
HO - Ar' (VI)
dans laquelle Ar' représente un reste aromatique ou hétéroaromatique,
en bisimides de l'acide pérylène tétracarboxylique tétrasubstitués de formule structurale générale (VIIa) ou en bisimides de l'acide pérylène tétracarboxylique disubstitués de formule structurale générale (VIIb) : 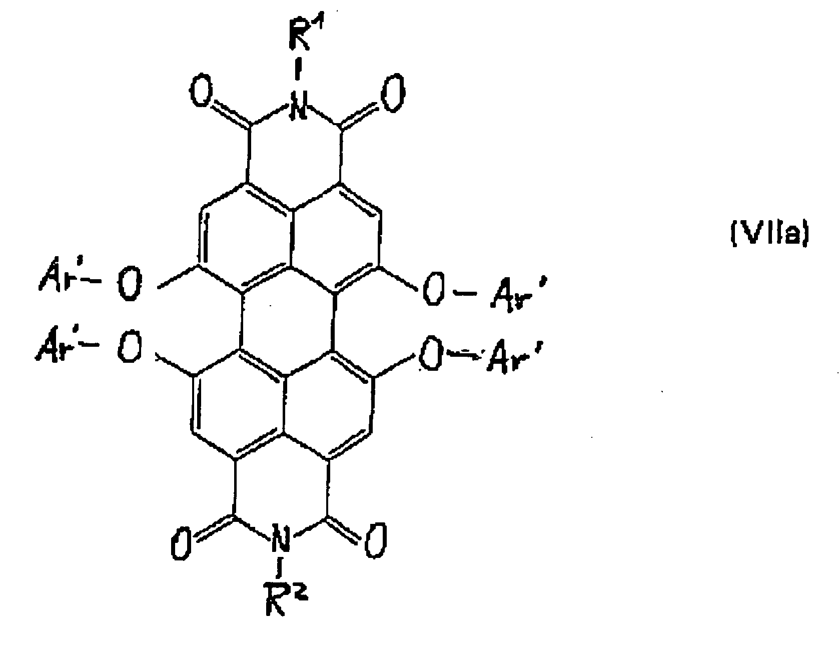 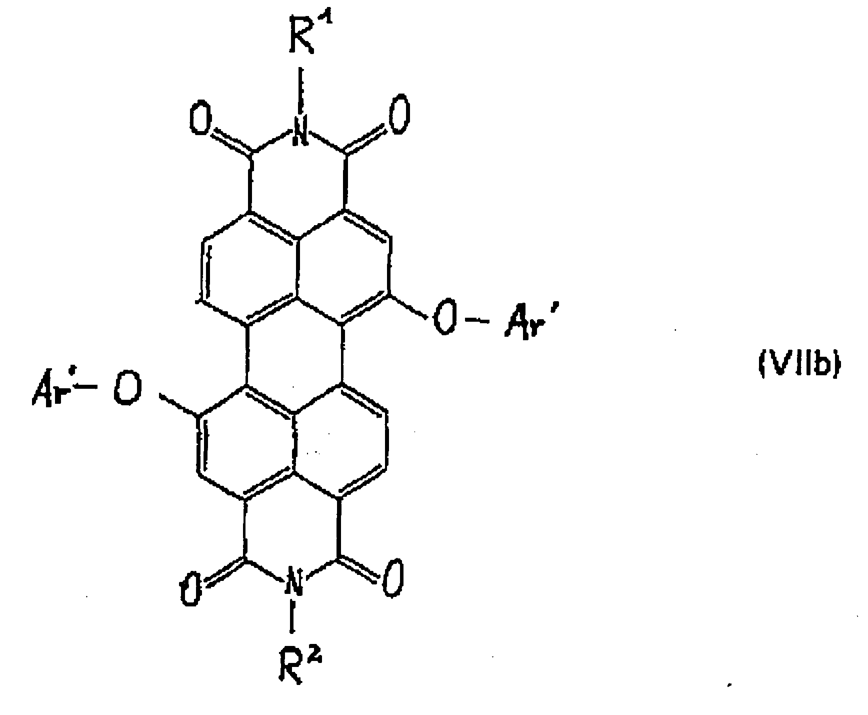 et
(b) introduire des groupes hydrophiles dans les restes aromatiques ou hétéroaromatiques Ar'.

13. Procédé selon la revendication 12, **caractérisé en ce que** l'étape (b) comprend l'introduction d'au moins un groupe SO₃H ou SO₃M dans Ar', sachant que M est un cation.

14. Procédé selon la revendication 12, **caractérisé en ce que** l'étape (b) comprend l'alkylation d'au moins un atome N hétéroaromatique dans Ar'.
